## Europäisches Patentamt

(19) **European Patent Office**

**Office européen des brevets**

(11) Veröffentlichungsnummer: **0 078 287 B1**

(12) **EUROPÄISCHE PATENTSCHRIFT**

(45) Veröffentlichungstag der Patentschrift:
**25.09.85**

(51) Int. Cl.⁴: **A 61 C 13/225**

(21) Anmeldenummer: **82901416.6**

(22) Anmeldetag: **04.05.82**

(86) Internationale Anmeldenummer:
**PCT/EP 82/00093**

(87) Internationale Veröffentlichungsnummer:
**WO 82/03763 (11.11.82 Gazette 82/27)**

(54) HALTERUNG ZUM LÖSBAREN VERBINDEN EINES ZAHNERSATZTEILES MIT DER EINEM PFEILERZAHN AUFGESETZTEN KRONE, SOG. GESCHIEBE.

(30) Priorität: **05.05.81 AT 1975/81**

(43) Veröffentlichungstag der Anmeldung:
**11.05.83 Patentblatt 83/19**

(45) Bekanntmachung des Hinweises auf die Patenterteilung:
**25.09.85 Patentblatt 85/39**

(84) Benannte Vertragsstaaten:
**BE CH DE FR GB LI NL SE**

(56) Entgegenhaltungen:
**WO - A - 79/00847**
**AT - A - 370 985**
**DE - A - 2 534 593**
**FR - A - 1 493 268**

(73) Patentinhaber: **PILAREK, Miroslaus, Ostenstrasse 7, D-4840 Rheda-Wiedenbrück (DE)**

(72) Erfinder: **PILAREK, Miroslaus, Ostenstrasse 7, D-4840 Rheda-Wiedenbrück (DE)**

(74) Vertreter: **Hentzschel, Hans-Jürgen, In der Feldmark 3, D-4970 Bad Oeynhausen 1 (DE)**

## Beschreibung

Die Erfindung betrifft eine Halterung zum lösbaren Verbinden eines Zahnersatzteiles mit der einem Pfeilerzahn aufgesetzten Krone, sog. Geschiebe, bestehend aus einer an der Krone befestigten hülsenartigen Matrize und einem vom Zahnersatzteil ausgehenden, als Patrize in die Matrize einrastbaren stirnseitig kreuzweise mit Schlitzen versehenen Zapfen, wobei die Matrize mit dem in sie einrastenden Zapfen eine sich in dessen Einschubrichtung gleichmässig erweiternde, kegelstumpfförmig gestaltete gemeinsame Anlagefläche und vor der sich erweiternden Anlagefläche einen gemeinsamen zylindrischen Halsansatz bildet.

Für die Befestigung von Zahnersatzteilen am Restgebiss sind starre und elastische Verankerungen bekannt. Während früher in Fachkreisen die Auffassung vorherrschend war, dass elastische Verbindungen die Belastung der Pfeilerzähne herabsetzen würde, gelten diese nach neueren Erkenntnissen als schädlich für das Restgebiss sowie die das Zahnersatzteil unterstützenden Schleimhautbereiche. Deshalb werden inzwischen allgemein starre Verbindungen bevorzugt, wofür in erster Linie Profilgeschiebe verschiedener Ausbildung zum Einsatz gelangen. Solche Parallelpassungen haben jedoch in der Einschubrichtung keine Fixierung aufzuweisen, was einen wesentlichen Nachteil darstellt.

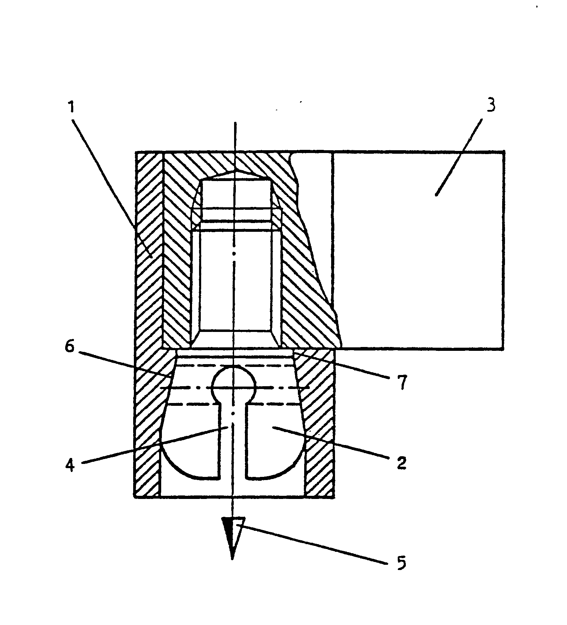

Ein in der zahntechnischen Praxis derzeit weitgehend verbreitetes Konusgeschiebe ist ähnlich der WO-A-79/00 847 gestaltet. Der gemäss den dortigen Fig. 1, 4 und 5 verwendete Doppelkonus kann allerdings nicht zu der angestrebten starren Verbindung führen, weil der kreuzweise geschlitzte Zapfen Kippbewegungen der Patrize ermöglicht, die besonders nach mehrmaligem Herausnehmen und Wiedereinsetzen des Zahnersatzteiles aufgrund der dadurch bewirkten ständigen Verformung des Zapfens verstärkt in Erscheinung treten und auch nicht mit erneutem Aufbiegen der Schlitze dauerhaft zu beheben sind. Vielmehr müssen solche ständigen Korrekturen zwangsläufig zur Zerstörung der Verankerung führen und damit das Zahnersatzteil unbrauchbar machen.

Das aus der WO-A-79/00 847 zu entnehmende Eindrehen eines Spreizzapfens in den Doppelkonus der Patrize würde zwar deren vorgenannte schädliche Verformungen vermeiden, gleichzeitig aber auch die Lösbarkeit des Zahnersatzteiles verhindern. Die andere aus der WO-A-79/00 847 hervorgehende Anregung besteht darin, den Zapfen mit einem zylindrischen Abschnitt zu versehen, der dann vor der sich in Einschubrichtung kegelstumpfförmig erweiternden Anlagefläche zusammen mit der Matrize einen gemeinsamen zylindrischen Halsansatz bilden könnte.

Ausgehend von diesem Stand der Technik ist es die Aufgabe der Erfindung, eine lösbare prothetische Verankerung von langer Lebensdauer zu schaffen, die unter Vereinigung der Vorzüge eines Konus- sowie eines Profilgeschiebes eine auch in der Einschubrichtung fest einrastende starre Verbindung zwischen dem Zahnersatzteil und dem Restgebiss herstellt. Dabei soll dieses Geschiebe einen möglichst geringen Platzbedarf aufweisen, um für kleinere Zähne, wie insbesondere Frontzähne, ebenfalls geeignet zu sein.

Zur Lösung der gestellten Aufgabe wird eine Halterung der eingangs genannten Art vorgeschlagen, die dadurch gekennzeichnet ist, dass die stirnseitigen Schlitze des in die Matrize einrastenden Zapfens in dessen kegelstumpfförmigem Abschnitt enden. Ferner können nach einem weiteren Erfindungsmerkmal die Schlitze des Zapfens in an sich bekannter Weise an ihrem innenliegenden Ende im Querschnitt schlüssellochartig ausgenommen sein.

Mit den Massnahmen der Erfindung wird nun eine bleibend lösbare sowie unbedingt starre Verbindung der Zahnersatzteile zu den Pfeilerzähnen des Restgebisses erreicht, indem der dem kegelstumpfförmigen Zapfen zugeordnete ungeschlitzte zylindrische Halsansatz keinerlei Kippbewegungen der Patrize in der Matrize mehr zulässt. Hierbei genügt es auch, wenn der ausserdem die Passgenauigkeit der Patrize verbessernde zylindrische Halsansatz verhältnismässig schmal ist, so dass die gesamte Verankerung mit einer ganz geringen Bauhöhe auskommt, die sie sogar für sehr zierliche Zähne und daher selbst in schwierigen Fällen uneingeschränkt verwendbar macht.

Ein Ausführungsbeispiel des Anmeldungsgegenstandes wird nachstehend anhand der Zeichnung erläutert, wobei in der Figur eine Schnittdarstellung einer lösbaren Verankerung für ein Zahnersatzteil gezeigt ist.

Wie aus der Abbildung hervorgeht, setzt sich die darin wiedergegebene Halterung aus einer an der Krone eines Pfeilerzahnes zu befestigenden hülsenartigen Matrize 1 und einem von dieser Matrize 1 aufgenommenen Zapfen 2 zusammen, der in einen zum Zahnersatzteil führenden Befestigungsarm 3 eingeschraubt ist. Damit sich der als Patrize dienende Zapfen 2 in die Matrize 1 einrasten lässt, ist er dadurch nachgiebig gestaltet, dass er stirnseitig kreuzweise verlaufende Schlitze 4 besitzt, die am innenliegenden Ende im Querschnitt schlüssellochartig ausgenommen sind.

Im Ausführungsbeispiel bildet die Matrize 1 mit dem in sie enrastenden Zapfen 2 eine sich in dessen Einschubrichtung 5 gleichmässig erweiternde kegelstumpfförmige gemeinsame Anlagefläche 6. Zur Herstellung einer starren Verbindung zwischen dem Zahnersatzteil und dem Restgebiss und zur einwandfreien Zentrierung des Zapfens 2 ist dieser sowie die Matrize 1 in der Einschubrichtung 5 des Zapfens 2 vor der sich erweiternden Anlagefläche 6 mit einem gemeinsamen zylindrischen Halsansatz 7 versehen, in den die Schlitze 4 des Zapfens 2 nicht hineinreichen. Mit diesem Halsansatz 7 soll auch der Verschleiss der Matrize 1 an ihrer Einschuböffnung so gering wie möglich gehalten werden.

## Patentansprüche

1. Halterung zum lösbaren Verbinden eines Zahnersatzteiles mit der einem Pfeilerzahn aufgesetzten Krone, sog. Geschiebe, bestehend aus einer an der Krone befestigten hülsenartigen Matrize (1) und einem vom Zahnersatzteil ausgehenden, als Patrize in die Matrize einrastbaren stirnseitig kreuzweise mit Schlitzen (4) versehenen Zapfen (2), wobei die Matrize mit dem in sie einrastenden Zapfen eine sich in dessen Einschubrichtung (5) gleichmässig erweiternde, kegelstumpfförmig gestaltete gemeinsame Anlagefläche (6) und vor der sich erweiternden Anlagefläche einen gemeinsamen zylindrischen Halsansatz (7) bildet, dadurch gekennzeichnet, dass die stirnseitigen Schlitze (4) des in die Matrize (1) einrastenden Zapfens (2) in dessen kegelstumpfförmigem Abschnitt enden.

2. Halterung nach Anspruch 1, dadurch gekennzeichnet, dass die Schlitze (4) des Zapfens (2) in an sich bekannter Weise an ihrem innenliegenden Ende im Querschnitt schlüssellochartig ausgenommen sind.

## Claims

1. Support for removably fixing a dental prosthesis part on a crown covering a pier tooth, a so-called precision attachment, consisting of a sleeve-type hollow part (1) fixed to the crown and of a stud (2) which projects from the dental prosthesis part, can engage as an insertable part in the hollow part and is provided on the end face with cross-slits (4), the hollow part and the stud engaging therein having a common contact surface (6), which widens uniformly in the direction of insertion (5) of the stud and has the shape of a truncated cone, and forming a common cylindrical neck attachment (7) in front of the widening contact surface, characterised in that the slits (4) on the end face of the stud (2) engaging in the hollow part (1) end in the truncated-cone section of the stud.

2. Support according to claim 1, characterised in that the slits (4) of the stud (2) are recessed, in a manner known per se, at their inward end with a keyhole-like cross-section.

## Revendications

1. Support pour la fixation d'une pièce de prothèse dentaire amovible à la couronne posée sur une dent de support, qui se compose d'une matrice (1) du genre douille fixée à la couronne et d'un tenon (2) sortant de la pièce de prothèse dentaire, pouvant être engagé comme élément mâle dans la matrice et présentant, à la face de bout, des fentes (4) formées en croix, la matrice formant, avec le tenon y engagé, une face d'appui commune (6) en forme de tronc de cône, allant en s'élargissant de façon régulière, dans le sens d'introduction (5) du tenon, et, à l'avant de la face d'appui allant en s'élargissant, une saillie de collet cylindrique commune (7), le support étant caractérisé en ce que les fentes (4) de la face de bout du tenon (2) s'éngageant dans la matrice (1) se terminent dans la partie de forme tronconique du tenon.

2. Support suivant la revendication 1, caractérisé en ce que les fentes (4) du tenon (2) sont, en section transversale, creusées en forme de trou de serrure, de façon connue en soi, à leur extrémité interne.